# EUROPÄISCHE PATENTANMELDUNG

(11) **EP 2 665 164 A2**
(43) Veröffentlichungstag der Anmeldung: **20.11.2013**
(21) Anmeldenummer: 13151150.3
(22) Anmeldetag: 14.01.2013
(51) Int. Cl.: H02K 15/095

(54) **Verfahren zum Herstellen eines Stators eines elektrischen Antriebs**

(30) Priorität: 15.05.2012 DE 102012208127
(71) Anmelder: Metabowerke GmbH, 72622 Nürtingen (DE)
(72) Erfinder: Spielmann, Andreas, 72587 Römerstein (DE); Bauer, Stefan, 72589 Westerheim (DE)
(74) Vertreter: Markfort, Iris-Anne Lucie

(57) **Zusammenfassung**

Die vorliegende Erfindung betrifft ein Verfahren sowie eine Vorrichtung zum Herstellen eines Stators (10) eines elektrischen Antriebs, wobei der Stator einen im wesentlichen zylindrischen Grundkörper umfasst und einen Spulenraum zur Aufnahme von Draht (20) aufweist, umfassend die Schritte Einlegen des Drahtes (20) in den Spulenraum des Stators (10), wobei ein erstes Ende (22a) des Drahtes (20) an einer ersten Stirnfläche (12a) des Statorkörpers aus dem Spulenraum vorsteht, Bewickelnd des Stators (10) mit dem Draht (20), Abschneiden oder Ablegen des Drahtes (20), so dass ein zweites Ende (22b) des Drahtes (20) an einer zweiten Stirnfläche (12b) des Statorkörpers aus dem Spulenraum vorsteht, Umlegen des ersten Drahtendes (22a) in dem Spulenraum in der Weise, dass beide Enden (22a, 22b) des Drahtes (20) an der zweiten Stirnfläche (12b) des Statorkörpers von dem Spulenraum vorstehen und innerhalb des Spulenraums auf den Drahtwindungen des gewickelten Drahtes (20a) aufliegen können.

## Beschreibung

Die Erfindung betrifft ein Verfahren zum Herstellen eines Stators eines elektrischen Antriebs, wobei der Stator einen im Wesentlichen zylindrischen Grundkörper umfasst und einen Spulenraum zur Aufnahme von Draht aufweist

Statoren werden in elektrischen Antrieben bzw. Elektromotoren eingesetzt, die neben dem Stator auch einen hierzu relativ bewegbaren Rotor umfassen. Eine übliche Anwendung solcher elektrischer Antriebe findet sich bei Haushaltsgeräten und Elektrowerkzeugmaschinen.

Ein Stator mit einem entsprechenden Rotor weist in der Regel einen Statorkörper mit einer geschlossenen Statorwand und paarweise daran angeordnete Polhörner bzw. Polspitzen auf. So sind an einem zweipoligen Stator beispielsweise vier Polhörner vorgesehen, die zu der Innenwand des Statorkörpers beabstandet an dieser angeordnet sind. Innerhalb dieser Polhörner ist der Rotor des elektrischen Antriebs angeordnet, welcher sich um eine Drehachse innerhalb des Stators relativ zu diesem rotatorisch bewegt.

Der Statorkörper, welcher wie der Rotor üblicherweise aus eisenhaltigen Werkstoff (Eisen) hergestellt ist, umfasst einen im Wesentlichen zylindrischen Grundkörper und weist einen Spulenraum auf, der eine Anzahl von Spulennuten, bei einem zweipoligen Stator vier Spulennuten, umfasst, die von den jeweiligen Polhörnern und der Statorwand begrenzt werden. In diese Spulennuten wird üblicherweise ein aus Kupfer bestehender Draht bzw. werden aus einem solchen gefertigte Feldspulen eingelegt.

Aufgrund des Aufbaus des Elektromotors wird der maximale Außendurchmesser des Rotors im Wesentlichen durch den Abstand der Polhörner voneinander bestimmt, während der Außendurchmesser des Stators die Baugröße des Elektromotors vorgibt.

Bei Elektrowerkzeugmaschinen, bei denen der Elektromotor in einem Gehäuseteil im Griffbereich des Anwenders angeordnet ist, wie zum Beispiel bei Winkelschleifern, Geradschleifern oder Polierern, kommt dem Durchmesser des Elektromotors eine besondere Bedeutung zu, da er einen direkten Einfluss auf den Griffdurchmesser und damit auf den Umfang des Griffteils hat. Gerade bei solchen Elektrowerkzeugmaschinen sollte der Umfang des Gehäuseteils, das den Handgriff bildet (das sogenannte Fadenmaß), für eine möglichst komfortable Handhabung der Elektrowerkzeugmaschine ein gewisses Maß nicht überschreiten. Aus diesem Grund ist es seit langem eine Aufgabe im Zusammenhang mit derartigen Elektrowerkzeugmaschinen, das Fadenmaß zu reduzieren. Gleichzeitig beeinflusst jedoch der maximale Außendurchmesser des Rotors maßgeblich die Leistung des Elektromotors, da dieser dem maximalen Hebelarm des Rotors entspricht und somit die Größe des abgegebenen Drehmoments des Elektromotors mitbestimmt.

Elektrische Antriebe mit einem Stator sowie einem darin angeordneten Rotor sind in der Regel luftgekühlt, wobei Umgebungsluft in den elektrischen Antrieb eingesaugt und durch diesen hindurch gezogen wird. Die durch den elektrischen Antrieb hindurchströmende Luft führt die Wärme von dem Kupferdraht der Feldspule(n) ab und stellt dabei sicher, dass der elektrische Antrieb ausreichend Leistung abgeben kann, ohne zu überhitzen.

Grundsätzlich fallen in einem elektrischen Antrieb verschiedene Arten von Verlusten an, die in Summe die Verlustleistung bilden, welche die zur Verfügung stehende Nutzleistung des Antriebs verringert. Neben der gewünschten Leistung sind es folglich die Verluste (und die zulässige Erwärmung) eines elektrischen Antriebs, welche seine Größe, d.h. dessen Abmessungen bestimmen. Allgemein lassen sich die Verluste in materialabhängige Verluste (Kupferverluste, Eisenverluste) und materialunabhängige Verluste unterteilen, wobei letztere vornehmlich von der Konstruktion des Antriebs abhängen. So ist es beispielsweise notwendig, Reibungsverluste innerhalb des Antriebs möglichst gering zu halten. Zudem können Strömungsverluste einer Luftströmung innerhalb des Antriebs die Luftkühlung und somit die Leistung verringern.

Eine entscheidende Anforderung, die seit Jahren an den elektrischen Antrieb von beispielsweise Elektrowerkzeugmaschinen gestellt wird, besteht darin, zunehmend höhere Leistungen bei gleichbleibender Gerätegröße oder bei einer gleichzeitigen Reduktion der Gerätegröße zu bieten.

Als Nachteil in Zusammenhang mit der Luftkühlung elektrischer Antriebe hat sich in der Praxis gezeigt, dass in der Kühlungsluft oftmals Staubpartikel enthalten sind, die an dem Spulendraht angreifen und im Betrieb der elektrischen Antriebs zu einer Abrasion des Spulendrahts führen können.

Um diesem Problem zu begegnen ist es aus der Praxis bekannt, handeingelegte, vorgewickelte Spulen vor dem Einlegen in den Spulenraum mit einer Bandage und/oder Isolierpapier zu umwickeln. Dabei ist jedoch dieser zusätzliche Arbeitsschritt des Umwickelns der vorgewickelten Spule äußerst aufwendig und somit sowohl zeit- also auch kostenintensiv bei der Herstellung. Weitere Nachteile von handeingelegten, vorgewickelten Spulen ergeben sich aus dem ebenfalls kosten-und zeitintensiven Schritt des Handeinlegens der Spule in den Spulenraum und aus dem Umstand, dass der Spulenraum bei handeingelegten Spulen niemals vollständig ausgenutzt werden kann, da stets ein geringer Spalt zwischen der Spulennut und der eingelegten vorgewickelten Spule verbleibt.

Alternativ wird der Spulenraum eines Statorkörpers direkt mit Spulendraht bewickelt, vorzugsweise mit Hilfe einer Nadelwickelmaschine oder dergleichen, da hierdurch eine höhere Packungsdichte des Spulendrahts in dem Spulenraum erreicht wird und weiterhin eine Schnellbewicklung erfolgen kann.

Ein solches automatisiertes Verfahren zum Einlegen von Kupferdraht in Form einer Feldspule in den Spulenraum zwischen Polhörnern und Statorwand eines zweipoligen Stators ist beispielsweise aus dem Dokument EP 1 225 679 A1 bekannt. Weiterhin ist gemäß der Norm DIN EN 60745 ein elektrischer Sicherheitsabstand zwischen einem aktiven Teil Eisen und einem Spulendraht von mindestens 2 mm gefordert. Daher ist es notwendig, bei jedem Elektromotor zu gewährleisten, dass die Luftstrecke zwischen dem Spulendraht sowohl zum Stator als auch zum darin aufgenommenen Rotor wenigstens 2 mm beträgt.

Demgemäß ist es bekannt, eine Isolation des Statorkörpers wie auch der Drahtenden der eingelegten Drahtspule bereitzustellen. Beispielsweise kann der Statorkörper durch Vorsehen einer speziellen Beschichtung, wie in der EP 1 225 679 A1 offenbart, mit Kunststoff umspritzt werden, während auf die Drahtenden ein Isolierschlauch aufgesetzt werden kann. Problematisch hierbei ist jedoch, dass insbesondere der Übergangsbereich von dem Spulenraum des Statorkörpers zu dem Isolierschlauch oftmals nicht ausreichend geschützt und isoliert ist.

Bei der automatisierten Bewicklung eines Stators wird in einem ersten Schritt der Draht in den Spulenraum des Stators eingelegt, wobei ein erstes Ende des Drahtes an einer ersten Stirnfläche des Statorkörpers aus dem Spulenraum vorsteht. Nachfolgend wird der Stator mit dem Draht bewickelt, bis eine gewünschte Spulendicke erreicht ist. Schließlich wird der Draht im Bereich eines zweiten Endes abgeschnitten, das an einer zweiten Stirnfläche des Statorkörpers aus dem Spulenraum vorsteht. Die Drahtenden können später bei der Verwendung des Stators zur elektrischen Kontaktierung der Drahtspulen genutzt werden.

Nachteilig neben der im Übergangsbereich mangelnden Isolation ist bei einem derartigen Aufbau der asymmetrische Aufbau des bewickelten Statorkörpers, der das weitere Handling bei der Montage erschwert, da eine Unterscheidung zwischen dem ersten und zweiten Drahtende erforderlich ist.

Demgemäß besteht eine Aufgabe der vorliegenden Erfindung darin, ein effizientes Verfahren zum Bewickeln des Stators bereitzustellen, das die bekannten Probleme bekannter Verfahren zumindest teilweise verringert.

Die Aufgabe wird durch ein Verfahren mit den Merkmalen des Anspruchs 1 gelöst.

Bei dem erfindungsgemäßen Verfahren wird in einem weiteren Schritt das erste Drahtende in dem Spulenraum in der Weise umgelegt, dass beide Enden des Drahtes an der gleichen Stirnfläche des Statorkörpers von dem Spulenraum vorstehen und innerhalb des Spulenraums auf den Drahtwindungen des gewickelten Drahts aufliegen können.

Wie im Stand der Technik gezeigt, kann der Spulenraum des Stators bei der vorliegenden Erfindung eine Anzahl von Spulennuten, beispielsweise im Falle eines zweipoligen Stators vier Spulennuten, umfassen. Der Statorkörper ist im Wesentlichen zylinderförmig ausgebildet und ersteckt sich entlang einer Längsachse. Weiterhin umfasst der Statorkörper zwei Stirnflächen. Die Rotationsachse eines zugehörigen Rotors ist parallel zu der Längsachse des Stators, wobei nachfolgend mit der Bezeichnung "Längsachse" auf die Mittellängsachse des Stators Bezug genommen wird, die in der Regel mit der Rotationsachse des Rotors zusammenfällt.

Das umzulegende erste Drahtende (Anfangsdraht) steht beispielsweise aus einer ersten Spulennut des Spulenraums an der ersten Stirnfläche axial über den Spulenraum vor und wird beim Schritt des Umlegens in eine zweite Spulennut des Spulenraums eingelegt, d.h. um beispielsweise 180° umgelenkt. Infolgedessen steht dieses abschließend an der gleichen Stirnfläche wie das zweite Drahtende von dem Spulenraum vor.

Dabei kann das Umlegen in umgekehrter Richtung zu der Richtung der Wickelbewegung des vorangegangenen Schrittes erfolgen.

Das umzulegende erste Drahtende weist ferner zumindest eine ausreichende von dem Spulenraum vorstehende Länge auf, die es ermöglicht, das erste Drahtende um eine weitere halbe Wicklung in den Spulenraum einzulegen, damit dieses von der gleichen Stirnfläche vorsteht wie das zweite Drahtende. Dementsprechend wird dann, wenn das erste Drahtende umgelegt werden soll, dieses mit einer entsprechend größeren Länge an Überstand über den Spulenraum eingelegt als üblich. Dabei kann der zusätzliche Überstand etwa so lang sein wie eine halbe Wicklungslänge.

Isbesondere wird das erste Drahtende, der sogenannte Anfangsdraht, in der Weise umgelegt, dass beide Enden des Drahtes innerhalb des Spulenraums auf den Drahtwindungen des gewickelten Drahtes aufliegen können.

Dieses hat gegenüber dem Stand der Technik den Vorteil, dass beispielsweise ein schlauchförmiges Isolationselement, das auf die Drahtenden aufgebracht werden soll, ohne weiteres bis in den Spulenraum hineinragen kann. Hierdurch wird auch der Übergangsbereich des Drahtes von dem Statorkörper nach außen isoliert und vor aggressiven Medien und Abrasion geschützt.

Im Stand der Technik muss, um diesen Effekt zu erzielen, in dem Bereich, in dem der Anfangsdraht in den Spulenraum eingelegt wird, ein zusätzlicher Platzhalter vorgesehen werden, damit ein Hohlraum bereitgestellt werden kann, durch den nachträglich eine Isolation in die dicht gewickelte Spule eingeschoben werden kann.

Bei der vorliegenden Erfindung kann auf das Vorsehen eines zusätzlichen Hohlraums im Bereich des Wicklungsanfangs verzichtet werden, was das Herstellungsverfahren vereinfacht. Zudem wird durch den Verzicht auf einen solchen Hohlraum der verfügbare Wickelraum im Spulenraum vergrößert, so dass ein größerer Füllfaktor des Spulenraums mit Draht und damit eine größere Leistung des elektrischen Antriebs erreicht werden kann.

Gemäß einer Weiterentwicklung der vorliegenden Erfindung kann der Statorkörper wenigstens zwei im Querschnitt betrachtet segmentförmige Teile (Statorsegmente) umfassen, die separat mit dem Draht bewickelt werden können.

Im Sinne der vorliegenden Beschreibung der Erfindung bezeichnet der Querschnitt eine Schnittebene, die senkrecht zu der Längsachse der Stators ist. Die Statorsegmente bilden zusammen einen im Wesentlichen im Querschnitt betrachtet kreisförmigen Statorkörper, wobei die wenigstens zwei Statorsegmente beispielsweise halbkreisförmig sein können. Je nach Gestaltung des Statorkörpers können jedoch auch mehr als zwei Statorsegmente vorgesehen sein, beispielsweise drei, vier, fünf oder mehr, die gemeinsam den Statorkörper bilden können. Diese können gleich große oder unterschiedlich große Statorsegmente umfassen, wobei unter Berücksichtigung der Herstellkosten mehrere Gleichteile vorteilhaft sind.

Diese Statorsegmente können in einem weiteren Schritt miteinander zu einem Statorkörper verbunden werden, wobei vorzugsweise die Statorsegmente mit einem zusätzlichen Verbindungsmittel stoffschlüssig miteinander verbunden werden, wobei das zusätzliche Verbindungsmittel Klebstoff, Träufelharz oder Backlack umfassen kann.

Weiterhin kann das Einlegen des Drahtes, das Bewickeln des Stators mit Draht und/oder das Umlegen eines der Drahtenden automatisiert, insbesondere mithilfe eines rotierenden Wickelarms, eines Greifer und/oder mithilfe einer rotierenden Aufnahme für den zu bewickelnden Statorkörper bzw. für das zu bewickelnde Statorsegment erfolgen.

So kann je nach Konzeption der Wickelstation ein rotierender Wickelarm oder Greifer vorgesehen sein, der den Statorkörper oder das Statorsegment mit Draht bewickelt. Nach Abschluss des Wickelvorgangs kann der Anfangsdraht bzw. das erste Drahtende von dem Wickelarm oder ersten Greifer durch eine eigene Rotationsbewegung oder eine Rotationsbewegung der Aufnahme wie gewünscht umlegt werden. Alternativ kann auch ein zweiter Greifer vorgesehen sein, der das erste Drahtende während des Wickelvorgangs hält und nach Abschluss des Wickelvorgangs das erste Drahtende durch eine eigene Rotationsbewegung oder eine Rotationsbewegung der Aufnahme wie gewünscht umlegt.

Bevor der entsprechende Spulendraht in den Spulenraum des Stators eingelegt wird, kann beispielsweise Isolierpapier, zum Beispiel in Streifenform, in den Spulenraum zu dessen Isolation eingelegt werden. Das Isolationspapier bildet dabei eine taschenförmige Nutisolation der jeweiligen Spulennut des Spulenraums aus, die weitere Elemente, wie ein schlauchförmiges Isolationselement oder Sensorikelemente aufnehmen kann.

So kann beispielsweise das erfindungsgemäße Verfahren weiterhin den Schritt umfassen: Einlegen von wenigstens einem Sensorelement in den Spulenraum. Ein derartiges Sensorelement kann beispielsweise einen Temperatursensor oder einen Sensor zur Erfassung von Drehzahlen umfassen.

Alternativ oder zusätzlich kann das erfindungsgemäße Verfahren weiterhin den Schritt umfassen: Anbringen von einem schlauchförmigen Isolierelement an wenigstens einem der beiden Drahtenden. Vorteilhaft ist dabei, wie bereits vorstehend ausgeführt, dass die schlauchförmigen Isolierelemente sowohl am Anfangsdraht (erstes Ende) als auch am Enddraht (zweites Ende) in den Spulenraum hineinragen können, ohne dass hierfür ein spezieller Hohlraum in der Spulenpackung bereitgestellt werden muss. Hierdurch wird eine verbesserte Isolation erreicht, wodurch die Wicklungsenden bzw. Drahtenden insbesondere auch im Übergangsbereich von dem Spulenraum nach außen gegen aggressive Medien (wie den Schleifstaub) besser geschützt sind.

Bei einer kombinierten Anbringung von schlauchförmigen Isolierelementen und Sensorelementen können diese auch unmittelbar miteinander kombiniert, d.h. vormontiert, sein, wodurch die weitere Herstellung des Stators und die befestigte Anbringung der Sensorelemente erleichtert wird.

Weiterhin kann das Isolationspapier in der Weise eingelegt werden, dass dieses aus der jeweiligen Spulennut heraus in eine Richtung senkrecht zu der Längsachse des Stators über den Spulenraum, insbesondere über das jeweilige den Spulenraum einseitig begrenzende Polhorn vorsteht.

Dieser Überstand des Isolierpapiers über das jeweilige Polhorn hinaus, bietet einen Abrasionsschutz eines in einem weiteren Schritt eingelegten Spulendrahts in den Spulenraum. Weiterhin ermöglicht das überstehende Isolierpapier eine elektrische Isolation des Spulendrahts gegenüber dem Stator und dem innerhalb des Stators aufgenommenen Rotors. So kann der gemäß DIN EN 60745 geforderte elektrische Sicherheitsabstand von einem aktiven Teil, wie dem Rotor oder Stator, zu einem elektrischen Draht, wie dem Spulendraht, von mindestens 2 mm Luftstrecke eingehalten werden, auch wenn der eingelegte Spulendraht über den verfügbaren Spulenraum hinaus vorsteht, d. h. bei einem Füllgrad von mehr als 100 % in den Spulennuten. In der Praxis war dies bislang nur mit Hilfe einer Bandage um eine vorgewickelte Feldspule oder durch einen geringeren Außendurchmesser des Rotors erreichbar. Letzteres hat eine geringere Leistung des elektrischen Antriebs zur Folge, während erstere Maßnahme, wie bereits vorstehend ausgeführt ist, kosten- und zeitintensiv ist.

Durch das Hochziehen des Isolierpapiers über die Polhörner hinaus kann mit Hilfe des erfindungsgemäßen Verfahrens jedoch die für die elektrische Isolation relevante Luftstrecke vergrößert werden, so dass der elektrische Sicherheitsabstand gemäß DIN EN 60745 eingehalten werden kann.

In einer Weiterentwicklung der vorliegenden Erfindung kann das Isolierpapier in einem Bereich von wenigstens 2 mm, vorzugsweise in einem Bereich von 5 mm bis 15 mm, aus der jeweiligen Spulennut heraus über das jeweilige Polhorn vorstehen.

Bei einer bevorzugten Ausführungsform kann während des Einlegens des Spulendrahts in den Spulenraum der vorstehende Teil des Isolierpapiers nach radial innen gezogen werden, um das Einlegen des Spulendrahts nicht zu behindern. Dabei bezeichnet nach radial innen eine Richtung, die auf die Mittellängsachse des Stators bezogen ist, d. h. eine Richtung von dem Spulenraum weg. Auf diese Weise kann der Statorkörper wie üblich bewickelt werden, ohne dass das Risiko besteht, dass das Isolierpapier beim Wickelvorgang nach innen verknickt wird.

Das erfindungsgemäße Verfahren kann ferner vorsehen, dass das Isolierpapier zumindest teilweise an dem Statorkörper und/oder an dem eingelegten Spulendraht fixiert wird. Hierzu kann ein zusätzliches Fixierungsmittel vorgesehen aufgebracht werden, das eine stoffschlüssige Verbindung zur Fixierung bereitstellt.

Definitionsgemäß umfasst eine stoffschlüssige Verbindung eine Verbindung, bei der die Verbindungspartner durch atomare oder molekulare Kräfte zusammengehalten werden. Stoffschlüssige Verbindung zeichnen sich zudem dadurch aus, dass sie nichtlösbare Verbindungen sind, die sich nur durch Zerstörung der Verbindungsmittel trennen lassen, wie beispielsweise Kleben oder Vulkanisieren.

Das zusätzliche Fixierungsmittel kann dementsprechend einen Klebstoff, Träufelharz oder Backlack umfassen. Besonders bevorzugt ist jedoch eine Ausgestaltung mit Backlack, da in einem nachfolgenden Fertigungsschritt der Statorkörper bzw. Stator ebenfalls durch Verbacken mit einem Beschichtungsmittel versehen werden kann, wobei das Beschichten des gesamten Statorkörpers bzw. Stators und das Fixieren des Isolierpapiers in einem Schritt erfolgen kann.

Ferner kann das Isolierpapier in gleicher Weise zusätzlich oder alternativ an dem Statorkörper angebracht werden. Dabei sieht eine vorteilhafte Ausgestaltung der Erfindung vor, dass das Isolierpapier zumindest abschnittsweise mit dem Fixierungsmittel beschichtet ist und durch Einlegen in eine der Spulennuten eines zumindest im Bereich des Spulenraums erwärmten Statorkörpers in der Spulennut stoffschlüssig fixiert werden kann.

Weiterhin kann auch vorgesehen sein, dass die Drahtenden zum Anschluss an eine Stromquelle ausgebildet werden, indem in einem Verfahrensschritt ein Anschlusselement an dem jeweiligen freien Endabschnitt der Drahtenden in der Weise befestigt wird, dass das Anschlusselement eine Isolationsschicht des Drahts soweit durchdringt, dass es einen elektrischen Kontakt mit dem Draht herstellen kann, wobei das Anschlusselement insbesondere durch Umformen, wie beispielsweise Crimpen oder dergleichen, an dem jeweiligen freien Endabschnitt des Drahtendes befestigt wird.

Weiterhin kann die Isolationsschicht des Drahtes einen Backlack umfassen und die Windungen des spulenförmig gewickelten Drahtes können in einem Verfahrensschritt durch Erhitzen mittels des Backlacks stoffschlüssig miteinander verbunden werden.

Schließlich soll auch eine Vorrichtung zur Herstellung eines Stators mit den vorstehenden Merkmalen geschützt sein.

Die Erfindung wird nachfolgend unter Bezugnahme auf die beigefügten Figuren detaillierter beschrieben.

Die beigefügten Figuren zeigen beispielhaft eine bevorzugte Ausführungsform, bei der die einzelnen Merkmale der Erfindung miteinander kombiniert sind. Der Fachmann wird diese jedoch selbstverständlich auch losgelöst voneinander betrachten und/oder zu anderen sinnvollen Kombinationen zusammenfassen können.

Es zeigen schematisch:
- Figur 1: eine isometrische Ansicht eines zweipoligen Stators;
- Figur 2: eine isometrische Ansicht des Stators der Figur 1, der mit einer Beschichtung versehen ist;
- Figur 3: eine Detailansicht einer Statorhälfte des Stators gemäß Figuren 1 und 2 mit einem Temperatursensorelement;
- Figuren 4a: und 4b isometrische Darstellungen einer Statorhälfte, die mit dem erfindungsgemäßen Verfahren mit Draht bewickelt wird, wobei die Figuren unterschiedliche Verfahrensstufen zeigen;
- Figur 5a: und 5b isometrische Darstellungen einer Statorhälfte, die mit dem erfindungsgemäßen Verfahren mit Draht bewickelt wurde, wobei die Figuren eine Ansicht der Statorhälfte von oben und von unten zeigen; sowie
- Figur 6: eine isometrische Darstellung einer Statorhälfte von unten, die mit dem erfindungsgemäßen Verfahren mit Draht bewickelt wurde, sowie ein Sensorelement.

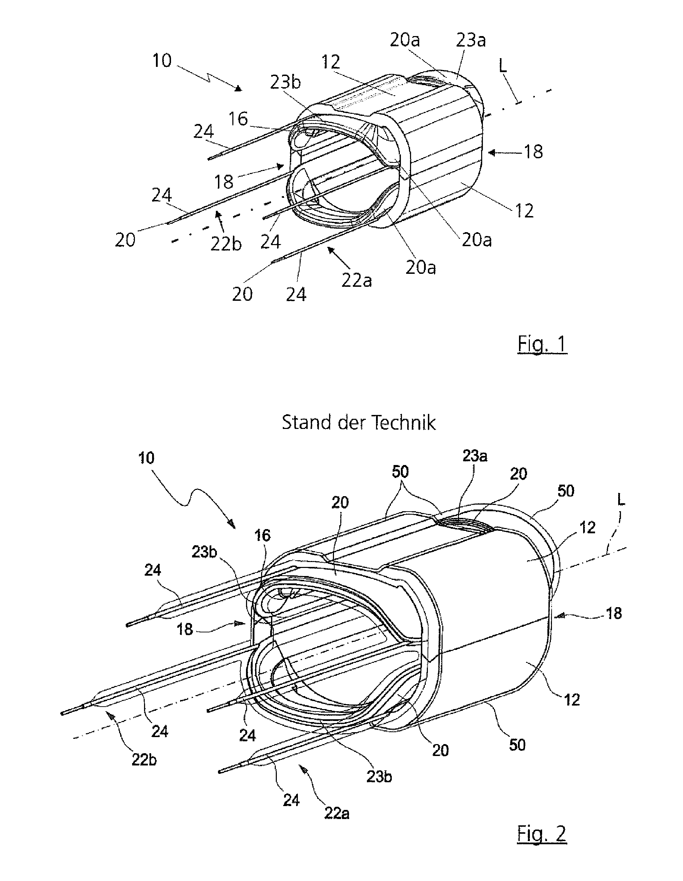

In den Figuren 1 bis 3 ist ein bekannter zweipoliger Stator eines elektrischen Antriebs gezeigt und allgemein mit dem Bezugszeichen 10 bezeichnet. Dabei sind die in den Figuren 1 und 2 gezeigten Statoren 10 identisch, wobei der Stator 10 der Figur 2 zusätzlich mit einer isolierenden Aussenbeschichtung 50 versehen ist.

Der zweipolige Stator 10 umfasst einen Statorkörper, welcher im Bereich einer sich entlang einer Längsachse L des Stators 10 erstreckenden Trennungsebene in zwei Statorsegmente bzw. Statorhälften 12 geteilt ist. Die beiden Statorhälften 12 sind dabei als identische Teile ausgebildet, was die Herstellung des Statorkörpers besonders einfach macht. In üblicher Weise ist der dargestellte Statorkörper des Stators 10 durch Stanzpaketieren von identischen Blechlamellen zu einem Blechpaket hergestellt.

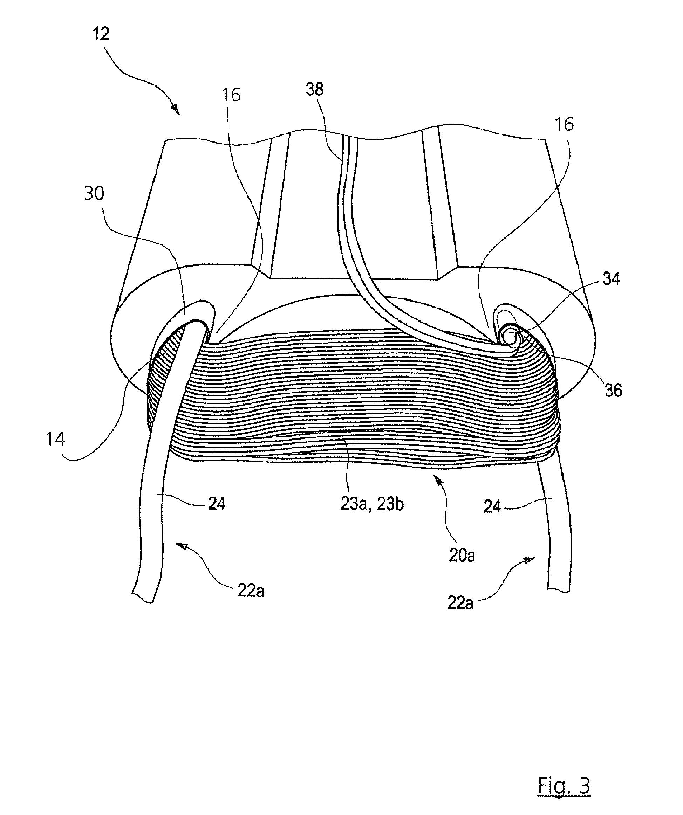

Weiterhin umfasst jede der Statorhälften 12 zwei Polhörner bzw. Polspitzen 16 (vgl. auch Fig. 3), die sich von der Innenumfangsfläche der jeweiligen Statorhälfte 12 nach innen erstrecken und somit den Innenraum des Stators 10 für einen darin aufzunehmenden Rotor (nicht dargestellt) begrenzen.

Die beiden Statorhälften 12 sind im Bereich zweier Verbindungsstellen 18 miteinander verbunden, wobei jede Statorhälfte 12 eine erste Verbindungsstelle 18a sowie eine zweite Verbindungsstelle 18b aufweist.

Weiterhin sind in der Figur 1 Endabschnitte bzw. Drahtenden 22a und 22b eines spulenförmig, d.h. in der Form einer Spule 20a mit einer Wicklungsstruktur und Wickelköpfen 23a und 23b, eingelegten Spulendrahts 20 zu erkennen. Dabei bezeichnet das erste Drahtende 22a den Anfangsdraht und das zweite Drahtende 22b den Enddraht des spulenförmig aufgewickelten Drahtes 20.

Wie aus der Figur 1 ersichtlich, sind die Drahtenden 22a, 22b als Anschlussdrähte jeweils mit einem Schrumpfschlauch 24 als Schlauchelement versehen, welches nicht außerhalb des Stators 10 endet, sondern in den Stator 10 eingeschoben ist, d.h. in die Wicklungsstruktur der Spule 20a hineinragt, um eine optimale Isolierung zu erreichen und einen Schutz vor leitfähigen Ablagerungen zu erhalten.

In der Figur 3 ist zudem gezeigt, dass die Statorinnenwand 12a und die radial äußere Wand 16a der Polhörner 16 eine Nut 14 begrenzen, in welche der aus Kupfer hergestellte Spulendraht 20 aufgenommen werden kann. Wie in den Figuren (vgl. insbesondere Figuren 2 und 3) zu erkennen ist, wird der Spulendraht 20 in der Form einer Spule 20a in den durch die Nuten 14 einer Statorhälfte 12 ausgebildeten Spulenraum eingelegt.

Wie in der Figur 3 gezeigt ist, umfasst der zweipolige Stator 10 mit seinen beiden Statorhälften 12 nicht nur einen durch die Statorhälften 12 gebildeten Statorkörper, der mit Spulendraht 20 bewickelt ist, sondern auch Isolierpapier 30, das in die Nuten 14 eingelegt wird, ehe der Spulendraht 20 auf die jeweilige Statorhälfte 12 aufgewickelt wird.

Das Isolierpapier 30 dient dazu, die durch den Spulendraht 20 gebildete Spule 20a im Betrieb eines den Stator 10 aufweisenden Elektromotors vor Abrasion zu schützen und elektrisch gegenüber dem Statorkörper sowie dem benachbarten Rotor (nicht gezeigt) zu isolieren. So ist gemäß der Norm DIN EN 60745 ein Mindestabstand von 2 mm Luftstrecke zwischen einem aktiven Teil, wie dem Statorkörper oder dem Rotor, und dem Spulendraht sicher zu stellen um eine elektrische Isolation zu gewährleisten. Dieser Effekt kann weiter dadurch verstärkt werden, dass das Isolierpapier 30 mit einem radialen Überstand über die jeweiligen Polhörner 16 hinaus vorgesehen ist.

Zudem kann, wie in der Figur 3 zu erkennen ist, auch ein (bezogen auf die Längsachse L des Stators 10) axialer Überstand des Isolierpapiers 30 sinnvoll sein, um den elektrischen Sicherheitsabstand von 2 mm Luftstrecke zwischen Spulendraht und aktivem Eisen zu gewährleisten.

Wie aus der Figur 3 weiter ersichtlich, ist ein gestrichelt angedeutetes Temperatursensorelement 34 in einem Hohlraum 36 in wenigstens einer der Spulennuten 14 untergebracht, um die Temperatur der Spule 20a bzw. des Spulendrahts 20 während des Betriebs zu erfassen. Das Temperatursensorelement 34 ist wenigstens annähernd vollständig von der Spule 20a umgeben, so dass in der Figur 3 lediglich die Anschlussleitung 38 aus der Spule herausragen.

Als nachteilig bei dieser aus dem Stand der Technik bekannten Lösung hat sich herausgestellt, dass zur nachträglichen Einführung eines Temperatursensorelements in die Spule, beim Bewickeln des Stators mit Spulendraht ein Hohlraum vorgesehen werden muss, in den das Temperatursensorelement eingeführt werden kann. Dies erfordert beispielsweise das Vorsehen eines Platzhalters während des Wickelvorgangs. Weiterhin wird durch den notwendigen Hohlraum in der Wickelstruktur der Spule der verfügbare Wickelraum verringert, so dass in diesem Bereich eine geringere Packungsdichte der Spule vorliegt.

Weiterhin kann es gewünscht sein, dass die beiden Drahtenden bzw. Drahtendabschnitte 22a, 22b, welche beim Wickelvorgang von der Spule 20a an den Statorhälften 12 entstehen, als Anschlussdrähte bzw. elektrische Anschlüsse des Elektromotors genutzt werden können. Hierfür werden die Drahtenden 22a, 22b in ausreichend großer Länge aus der Spule 20a herausgeführt. Um eine ausreichende Isolation und einen Schutz gegen Abrasion bereitstellen zu können, werden zusätzlich noch, wie vorstehend erwähnt Isolierschläuche 24 auf die Drahtenden 22a, 22b aufgeschrumpft.

Für eine optimale Isolation insbesondere auch im Übergangsbereich vom Spulenraum nach außen, ist es ebenfalls notwendig zumindest im Bereich des Anfangsdrahtes 22a einen Hohlraum in der Spule vorzusehen, in der der Isolationsschlauch eingeschoben werden kann. Dies führt im Stand der Technik zu den im Zusammenhang mit einem Temperatursensorelement beschriebenen Nachteilen.

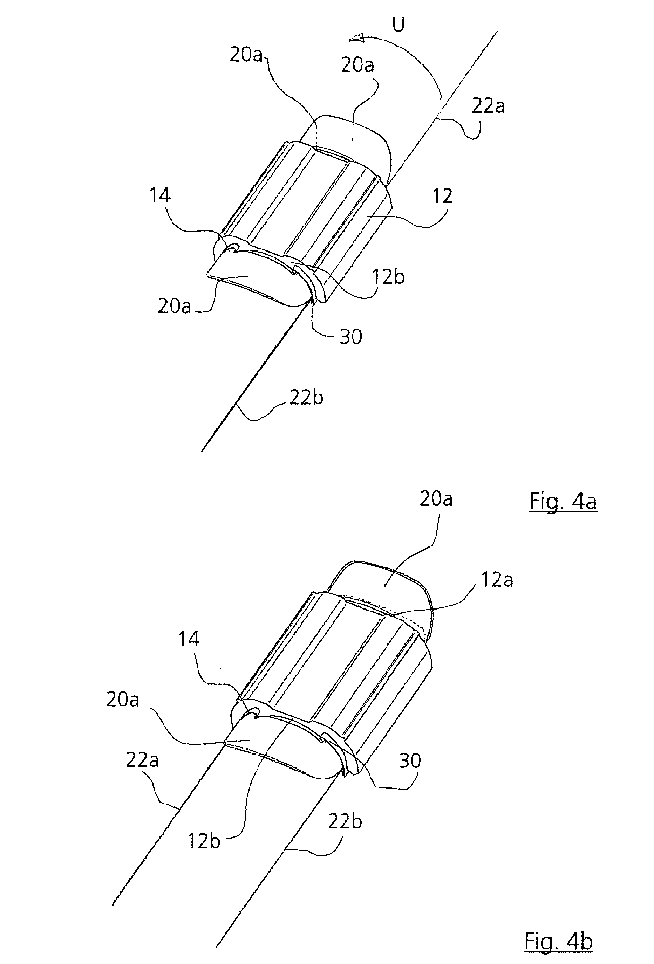

Die Figuren 4a bis 6 zeigen nun eine mit dem erfindungsgemäßen Verfahren hergestellte Statorhälfte 12 eines Stators. Alle Merkmale, die bereits im Zusammenhang mit einem bekannten Stator gemäß den Figuren 1 bis 3 beschrieben sind, sind bei dem erfindungsgemäßen Stator mit den gleichen Bezugszeichen bezeichnet.

Die Statorhälfte 12 ist in Figur 4a bereits vollständig bewickelt, wobei ein erstes Drahtende 22a von der ersten Stirnfläche 12a axial vorsteht, während das zweite Drahtende 22b von der zweiten Stirnfläche 12b der Statorhälfte 12 vorsteht. Wie man anhand der Figur 4a weiterhin erkennen kann, liegen beide Drahtenden 22a, 22b in derselben Spulennut (von vorne betrachtet in der rechten Spulennut).

In einem weiteren Verfahrensschritt wird nun das erste Drahtende 22a, wie in Figur 4a durch den Pfeil U angedeutet, umgelegt, d.h. um etwa 180° umgelenkt und in der zweiten Spulennut (von vorne betrachtet in der linken Spulennut) nach vorne, d.h. zu der zweiten Stirnseite 12b geführt.

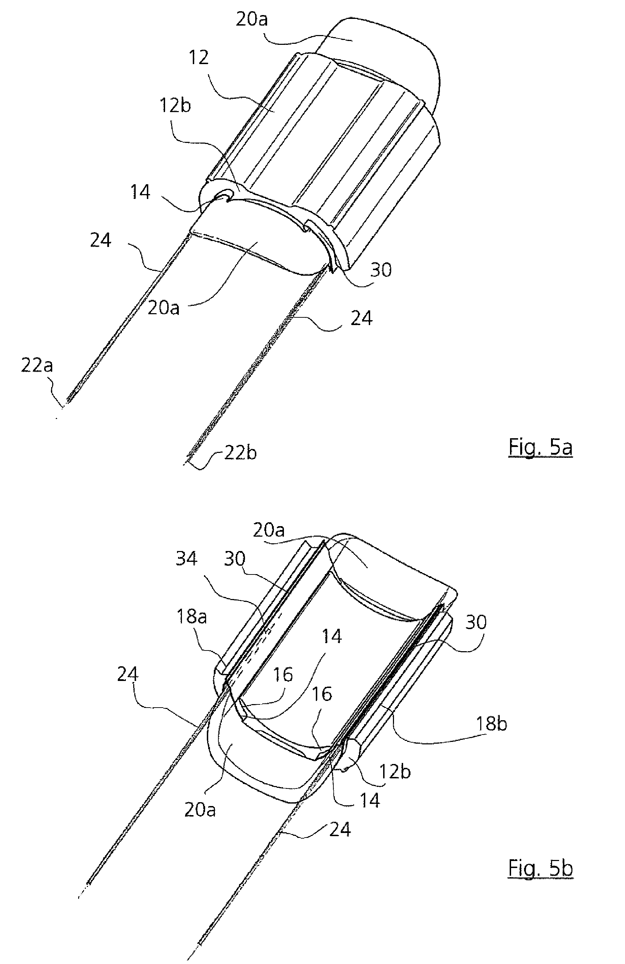

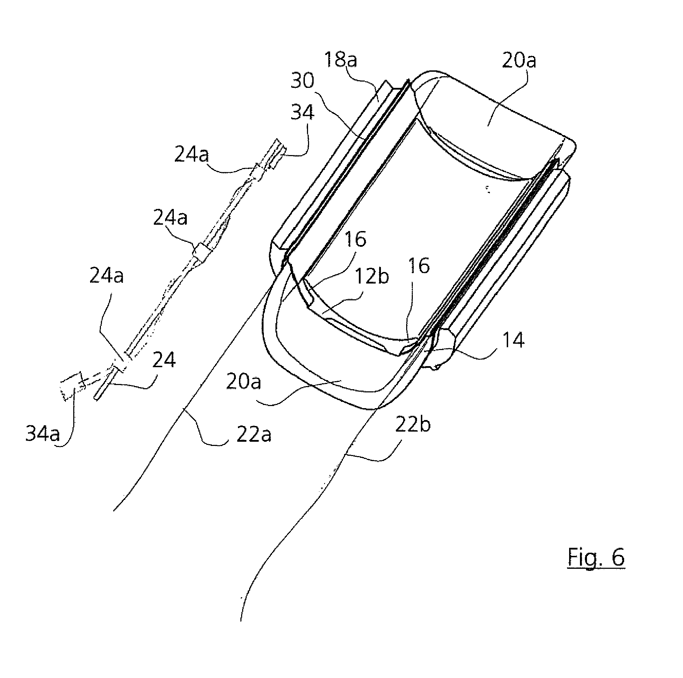

In Figur 4b erkennt man, dass infolge dieses Schrittes des Umlegens das erste Drahtende 22a nun ebenfalls von der zweiten Stirnfläche 12b der Statorhälfte 12 axial vorsteht. Weiterhin liegen beide Drahtenden 22a und 22b auf den Windungen der im Spulenraum gewickelten Drahtspule 20a auf, wodurch ein einfaches Auf- bzw. Einschieben von zusätzlichen Elementen, wie von isolierenden Schlauchelementen 24 (vgl. Fig. 5a und 5b) oder von einem Temperaturfühler bzw. Temperatursensorelement 34 (vgl. Fig. 6), auf die Drahtenden 22a, 22b bzw. in den Spulenraum ermöglicht wird.

Ein zusätzlicher Hohlraum in der Spule 20a, wie er bei aus dem Stand der Technik bekannten Verfahren zur Herstellung eines Stators erforderlich ist, muss nicht mehr vorgesehen werden, wodurch das Herstellungsverfahren deutlich vereinfacht werden kann. Weiterhin kann der zwischen den Polhörnern 16 und der Statorinnenumfangsfläche verfügbare Wickelraum besser ausgenutzt werden und ein höherer Füllfaktor erzielt werden, was eine verbesserte Leistung eines mit dem Stator versehenen elektrischen Antriebs zur Folge hat. So kann bei gleichem beanspruchtem Bauraum insgesamt mit der Spule 20a ein höherer magnetischer Fluss erzeugt werden und damit eine höhere Leistung des Elektromotors erreicht werden.

In der Figur 5b ist beispielhaft strichliert dargestellt, wie weit der Isolationsschlauch 24 in die Spulennut 14 eingeführt werden kann, um eine optimale Isolierung zu erreichen und einen Schutz vor leitfähigen Ablagerungen zu erhalten.

Als Schlauchelemente kommen beispielsweise Kunststoffschläuche oder Glasgewebeschläuche in Betracht. Weiterhin könnte statt des Schlauchelements zur Isolation auch ein Hülsenelement vorgesehen sein.

Grundsätzlich können die Drahtenden 22a und 22b genutzt werden, um die Funktion von aus dem Stand der Technik bekannten separaten Litzen zu übernehmen und einen Anschluss der Spule 20a an eine Stromquelle oder einen Stromverteiler (nicht gezeigt) zu ermöglichen. An den freien Enden der Drahtendabschnitte 22a, 22b können beispielsweise separate Anschlusselemente, beispielsweise in der Form einer Crimpkralle (nicht dargestellt) in der Weise befestigt werden, dass diese eine zusätzliche isolierende Außenschicht (beispielsweise eine isolierende Grundschicht sowie eine darauf aufgebrachte Backlackschicht) des Spulendrahts 20 durchdringen und eine elektrische Kontaktierung der Spule ermöglichen. Die Anschlusselemente (nicht dargestellt) können zudem in ihrer Außengeometrie in der Art eines Steckers ausgebildet sein, der in einen korrespondierenden Steckverbinder an der Stromquelle bzw. dem Stromverteiler des elektrischen Antriebs eingesteckt werden kann.

Nachfolgend wird der erfindungsgemäße Herstellungsprozess eines zweipoligen Stators unter Bezugnahme auf die Figuren beschrieben:

Aus einem durch Stanzpaketieren von identischen Blechlamellen hergestellten Blechpaket werden die beiden Statorhälften 12 in Anlage zueinander ausgestanzt, die in einem weiteren Prozessschritt mit Kupferdraht bewickelt werden sollen.

Um im Betrieb eine ausreichende elektrische Isolation gewährleisten und ausreichend große Abstände zwischen der Spule und aktiven Teilen des Elektromotors bereitstellen zu können, wird, bevor die Statorhälften 12 bewickelt werden, Isolierpapier 30 in die Nuten 14 der jeweiligen Statorhälften 12 eingelegt.

Das eingelegte Isolierpapier 30 weist dabei, wie bereits vorstehend beschrieben, einen radialen Überstand über die Polspitzen 16 der jeweiligen Statorhälften 12 hinaus auf. Dieser Überstand kann während des nachfolgenden Wickelvorgangs zusätzlich nach radial innen gezogen werden, um während des Bewickelns sicherzustellen, dass das Isolierpapier 30 nicht durch den Spulendraht 20 geknickt wird.

In einem weiteren Schritt wird jede der Statorhälften 12 automatisiert, beispielsweise mit Hilfe eines Wickelarms oder eines Greifers mit dem Spulendraht 20 bewickelt. Abschließend wird das erste Drahtende 22a wie vorstehend beschrieben umgelegt.

Im Anschluss daran kann ein Schrumpfschlauch 24 auf das jeweilige Drahtende 22a, 22b aufgebracht und in den Spulenraum des Stators, die jeweilige Spulennut 14, eingeführt werden. Anschließend kann der Schrumpfschlauch 24 beispielsweise mittels eines Schlauchfixiermittels in der Wicklungsstruktur der Spule 20a fixiert werden. Das Schlauchfixiermittel kann Klebstoff oder Träufelharz, vorzugsweise ein dual härtendes Harz umfassen.

Schließlich können Anschlusselemente an den freien Enden der Drahtendabschnitte 22a, 22b befestigt werden, wobei diese bevorzugt nicht nur an den Drahtendabschnitten 22a, 22b angreifen, sondern im befestigten Zustand auch den Schrumpfschlauch 24 durchdringen, um auf diese Weise eine optimale Isolation und Schutzwirkung zum Schutz der Drahtendabschnitte 22a, 22b bereitstellen zu können.

Nachdem die beiden Statorhälften 12 auf diese Weise hergestellt und bewickelt sind, werden diese miteinander verbunden, um gemeinsam den Statorkörper zu bilden. Hierzu werden die beiden Statorhälften 12 im Bereich ihrer Verbindungsstellen 18 aneinander angelegt, wobei jeweils eine erste Verbindungsstelle 18a einer Statorhälfte 12 in Anlage mit einer zweiten Verbindungsstelle 18b der jeweils anderen Statorhälfte 12 gebracht wird.

Wie in den Figuren 5b und 6 zu erkennen ist, wird die erste Verbindungsstelle 18a der beiden Statorhälften 12 jeweils durch eine entlang der Längsachse L verlaufende dreieckförmige Nut 18a gebildet, während die zweite Verbindungsstelle 18b durch einen korrespondierenden entlang der Längsachse L verlaufenden dreieckförmigen Vorsprung 18b gebildet ist. Durch die spezielle Ausbildung der ersten und zweiten Verbindungsstelle 18a und 18b kann eine einfache Herstellung der Verbindungsstellen 18 ermöglicht werden.

Weiterhin wird durch die Ausprägung der ersten und zweiten Verbindungsstellen 18a und 18b eine Ausrichtung der Statorhälften 12 zueinander erreicht, wenn die jeweils korrespondierende erste Verbindungsstelle 18a mit der zweiten Verbindungsstelle 18b in Anlage gebracht wird. Schließlich kann durch diese spezielle Ausgestaltung der Verbindungsstellen 18 gewährleistet werden, dass die Statorhälften 12 bei der Herstellung des Statorkörpers in direkter Anlage zueinander aus dem Material ausgestanzt werden können, was zu einem geringeren Anfallen von Verschnitt gegenüber dem Stand der Technik führt.

Die beiden aneinander anliegenden Statorhälften 12 können in einem weiteren Schritt mittels Tauchimprägnierung aneinander fixiert werden. Hierzu können die beiden aneinander anliegenden Statorhälften 12 bzw. die aufgewickelte Spule 20a erwärmt und in ein Tauchbad, insbesondere mit dual härtendem Harz (Träufelharz bzw. Dualharz) eingetaucht werden, welches sowohl unter Wärmeeinwirkung als auch unter UV-Licht aushärtet. Aufgrund der Kapillarwirkung der Zwischenräume zwischen den einzelnen Windungen der Spule 20a wird diese weitgehend von dem Träufelharz durchsetzt. Dadurch, dass die Spule 20a erwärmt wird, kann das Harz an der Spule 20a und insbesondere auch im Inneren der Spule 20a zwischen den Windungen bereits während des Tauchvorgangs aushärten, wodurch die gesamten Spule 20a mechanisch soweit stabilisiert werden kann, dass sie der mechanischen Beanspruchung im späteren Einsatz standhält. In den Außenbereichen des Stators 10, die nicht die gleiche Temperatur wie die Spule 20a haben, kann im Fall der Verwendung eines Dualharzes das Harz in einem weiteren Schritt mittels UV-Licht ausgehärtet werden.

Die Tauchimprägnierung dient nicht nur als zusätzlicher Schutz des gesamten Statorkörpers vor Abrasion, sondern auch als Statorfixiermittel zur stoffschlüssigen Verbindung der Statorhälften 12 miteinander. Grundsätzlich ist es jedoch auch denkbar, vor dem Schritt der Tauchimprägnierung die beiden Statorhälften beispielsweise durch Kleben, Schweißen oder Löten oder dergleichen stoffschlüssig miteinander zu verbinden. Dabei ist sowohl denkbar, nur einzelne Fixierungspunkte anzubringen, als auch eine Verbindungsnaht entlang der Verbindungsstellen 18 vorzusehen, um die Statorhälften während der Tauchimprägnierung in ihrer relativen Lage zueinander zu halten.

Das Statorfixiermittel, d.h. in dem beschriebenen Fall das Dualharz kann auch als Schlauchfixiermittel dienen bzw. als Sensorfixiermittel.

Die vorstehend beschriebene Tauchimprägnierung ist äußerst vorteilhaft, da diese eine Beschichtung von Spule und Statorkörper sowie das Fixieren der Statorhälften aneinander in einem einzigen Prozessschritt ermöglicht. Weiterhin wird durch die verwendete Tauchimprägnierung sichergestellt, dass der Stator ein in sich sowohl elektrisch optimal isoliertes als auch gegen Abrasion geschütztes Gesamtsystem bildet. Grundsätzlich sind auch andere Beschichtungsverfahren zur Erzeugung des beschichteten Stators 10 wie bspw. Besprühen denkbar.

Der fertiggestellte Stator kann nachfolgend in ein Motorgehäuse (nicht gezeigt) eingesetzt werden.

In der Figur 6 ist abschließend eine besonders vorteilhafte Kombination eines Sensorelementes mit einem isolierenden Schlauchelement gezeigt. Dabei ist beispielhaft als Sensorelement ein Temperatursensorelement 34 gezeigt, dessen Verbindungsleitung 38 mithilfe von Verbindern 24a mit einem schlauchförmigen Isolationselement 24 verbunden ist. An einem zweiten Ende der Verbindungsleitung 28 ist ein Anschluss 34a als Schnittstelle vorgesehen, über den das Sensorelement 34 seine Messdaten beispielsweise an eine verbundene Verarbeitungseinheit weiterleiten kann.

Dadurch dass das Sensorelement mit einem isolierenden Schlauchelement verbunden ist, können diese gemeinsam als vormontierte Einheit an dem Drahtende 22a oder 22b angebracht werden, wodurch die Montagezeit verkürzt wird.

## Patentansprüche

1. Verfahren zum Herstellen eines Stators (10) eines elektrischen Antriebs, wobei der Stator einen im wesentlichen zylindrischen Grundkörper umfasst und einen Spulenraum zur Aufnahme von Draht (20) aufweist, umfassend die Schritte:
- Einlegen des Drahtes (20) in den Spulenraum des Stators (10), wobei ein erstes Ende (22a) des Drahtes (20) an einer ersten Stirnfläche (12a) des Statorkörpers aus dem Spulenraum vorsteht,
- Bewickelnd des Stators (10) mit dem Draht (20),
- Abschneiden oder Ablegen des Drahtes (20), so dass ein zweites Ende (22b) des Drahtes (20) an einer zweiten Stirnfläche (12b) des Statorkörpers aus dem Spulenraum vorsteht,
- Umlegen des ersten Drahtendes (22a) in dem Spulenraum in der Weise, dass beide Enden (22a, 22b) des Drahtes (20) an der zweiten Stirnfläche (12b) des Statorkörpers von dem Spulenraum vorstehen und innerhalb des Spulenraums auf den Drahtwindungen des gewickelten Drahtes (20a) aufliegen können.

2. Verfahren nach Anspruch 1,
wobei der Statorkörper wenigstens zwei im Querschnitt betrachtet segmentförmige Teile (12) umfassen kann, die separat mit dem Draht (20) bewickelt werden, und wobei in einem weiteren Schritt die Statorsegmente (12) miteinander verbunden werden.

3. Verfahren nach Anspruch 1 oder 2,
wobei das Einlegen des Drahtes (20), das Bewickeln des Stators (10) mit Draht (20) und/oder das Umlegen des ersten Drahtendes (22a) automatisiert mithilfe eines rotierenden Wickelarms, eines Greifers und/oder mithilfe einer rotierenden Aufnahme für den zu bewickelnden Statorkörper oder für das zu bewickelnde Statorsegment (12) erfolgt.

4. Verfahren nach einem der Ansprüche 1 bis 3,
das ferner den Schritt umfasst:
- Einlegen von Isolierpapier (30) in den Spulenraum zur Isolation des Spulenraums.

5. Verfahren nach einem der Ansprüche 1 bis 4,
das ferner den Schritt umfasst:
- Einlegen von wenigstens einem Sensorelement (34) in den Spulenraum.

6. Verfahren nach einem der Ansprüche 1 bis 5,
das ferner den Schritt umfasst:
- Anbringen von einem schlauchförmigen Isolierelement (24) an wenigstens einem der beiden Drahtenden (22a, 22b), wobei dieses bevorzugt auf das jeweilige Drahtende (22a, 22b) aufgeschrumpft werden kann.

7. Verfahren nach den Ansprüchen 5 und 6,
wobei das Sensorelement (34) an dem Isolierelement (24) befestigbar ist und bevorzugt an diesem vor Anbringen des Isolierelements (24) an einem der beiden Drahtenden (22a, 22b) vormontiert werden kann.

8. Verfahren nach einem der Ansprüche 1 bis 7,
wobei die Drahtenden (22a, 22b) zum Anschluss des spulenförmig gewickelten Drahtes (20) des Stators (10) an einer Stromquelle ausgebildet werden, indem in einem Verfahrensschritt ein Anschlusselement an dem jeweiligen freien Endabschnitt der Drahtenden (22a, 22b) in der Weise befestigt wird, dass das Anschlusselement eine Isolationsschicht des Spulendrahts (20) soweit durchdringt, dass es einen elektrischen Kontakt mit dem Draht herstellen kann, wobei das Anschlusselement insbesondere durch Umformen, wie beispielsweise Crimpen oder dergleichen, an dem jeweiligen freien Endabschnitt des Drahtendes (22a, 22b) befestigt wird.

9. Verfahren nach Anspruch 8,
wobei die Isolationsschicht des Drahts (20) einen Backlack umfassen kann und die Windungen des spulenförmig gewickelten Drahtes (20a) in einem Verfahrensschritt durch Erhitzen mittels des Backlacks stoffschlüssig miteinander verbunden werden können.

10. Vorrichtung zur Herstellung eines Stators (10) nach einem der Ansprüche 1 bis 9, umfassend wenigstens eine Vorrichtung zum Umlegen des ersten Drahtendes (20a) in der Weise, dass das erste Drahtende (20a) und das zweite Drahtende (22b) an der gleichen Stirnfläche (12b) des Statorkörpers von dem Spulenraum vorstehen und beide Drahtenden (22a, 22b) innerhalb des Spulenraums auf den Drahtwindungen des spulenförmig gewickelten Drahtes (20a) aufliegen können.
